# EUROPEAN PATENT APPLICATION

(11) **EP 4 685 168 A1**
(43) Date of publication of application: **28.01.2026**
(21) Application number: 24774930.2
(22) Date of filing: 19.03.2024
(51) Int. Cl.: C08F 293/00, C08F 16/14

(54) **METHOD FOR PRODUCING BLOCK COPOLYMER**

(30) Priority: 20.03.2023 JP 2023044568
(71) Applicant: Maruzen Petrochemical Co., Ltd., Tokyo 104-8502 (JP)
(72) Inventor: SUGIHARA, Shinji, Fukui-shi, Fukui 910-8507 (JP); SUGIYAMA, Masaki, Ichihara-shi, Chiba 290-8503 (JP)
(74) Representative: Wächtershäuser & Hartz Patentanwaltspartnerschaft mbB
(86) International application number: PCT/JP2024/010788
(87) International publication number: WO 2024/195796

(57) **Abstract**

There is provided a method capable of easily producing a block copolymer of a vinyl ether-based monomer and a wide variety of hydrophobic monomers at low cost.

There is provided a method for producing a block copolymer represented by the following Formula (2), the method including a step of photopolymerizing a hydrophobic monomer by irradiating the hydrophobic monomer with light in the presence of a vinyl ether-based polymer represented by the following Formula (1).

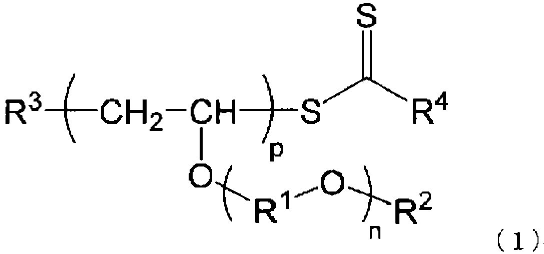

[In Formula (1),
R¹ represents an alkanediyl group having 1 to 5 carbon atoms,
R² represents a hydrogen atom or an alkyl group having 1 to 3 carbon atoms,
R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶) (R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
n represents an integer from 1 to 10, and
p represents the number of repetitions of a repeating unit.]

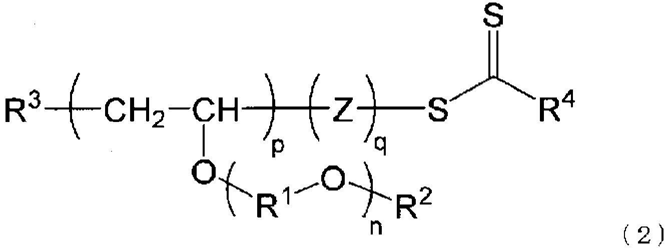

[In Formula (2),
Z represents a repeating unit derived from the hydrophobic monomer,
q represents the number of repetitions of the repeating unit derived from the hydrophobic monomer, and
R¹, R², R³, R⁴, n, and p have the same meaning as described above.]

## Description

### Technical Field

The present invention relates to a method for producing a block copolymer. More specifically, the present invention relates to a method for producing a vinyl ether-based block copolymer, a fine particle containing a vinyl ether-based block copolymer, and a photopolymerization initiator.

### Background Art

A block copolymer of a vinyl ether-based monomer and a hydrophobic monomer is used as a polymeric surfactant, a thermoplastic elastomer, a coating material, an adhesive, a template agent for lithography, and the like.

As a method for producing such a block copolymer, a living cationic polymerization method is known (Patent Literature 1 and Non-Patent Literature 1 and 2). In the case of the living cationic polymerization method, there is a problem that a metal catalyst is required, and thus the cost increases. In addition, only a specific hydrophobic monomer can be used in a polymerization reaction with the vinyl ether-based monomer by the living cationic polymerization method.

### Citation List

### Patent Literature

Patent Literature 1: JP-A 2013-40245
Patent Literature 2: JP-A 2016-210887

### Non-Patent Literature

Non-Patent Literature 1: Macromolecules, 27, 3714-3720
(1994) Non-Patent Literature 2: Polymer Journal, 72, 486-490 (2015)

### Summary of Invention

### Technical Problem

As a method for producing a copolymer of 2-hydroxyethyl vinyl ether and vinyl acetate or N-vinylpyrrolidone, it is known that poly(2-hydroxyethyl vinyl ether) polymerized by using S-cyanomethyl-N-methyl-N-phenylcarbamodithioate is used as a macro chain transfer agent, to subject vinyl acetate or N-vinylpyrrolidone to a radical RAFT polymerization in the presence of a radical polymerization initiator (Patent Literature 2).

However, in the radical RAFT polymerization method described in Patent Literature 2, it is necessary to previously purify the macro chain transfer agent prior to the copolymerization reaction. When a conjugated monomer such as styrene or (meth)acrylic acid ester is used, the polymerization reaction sometimes does not proceed.

An object of the present invention is to provide a method by which a block copolymer of a vinyl ether-based monomer and a wide variety of hydrophobic monomers can be easily produced at low cost.

### Solution to Problem

As a result of intensive studies, the present inventors have found that a block copolymer of a vinyl ether-based monomer and a wide variety of hydrophobic monomers can be easily produced at low cost by photopolymerizing a hydrophobic monomer using a specific vinyl ether-based polymer as a photopolymerization initiator, and consequently have completed the present invention.

That is, the present invention provides the following <1> to <11>.
<1> A method for producing (hereinafter also referred to as "production method of the present invention") a block copolymer (hereinafter also referred to as "block copolymer (2)") represented by the following Formula (2), the method including a step of photopolymerizing a hydrophobic monomer by irradiating the hydrophobic monomer with light in the presence of a vinyl ether-based polymer (hereinafter also referred to as "vinyl ether-based polymer (1)") represented by the following Formula (1). 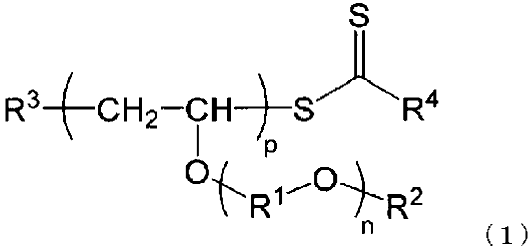 [In Formula (1),
   R¹ represents an alkanediyl group having 1 to 5 carbon atoms,
   R² represents a hydrogen atom or an alkyl group having 1 to 3 carbon atoms,
   R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶)(R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
   R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
   n represents an integer from 1 to 10, and
   p represents the number of repetitions of a repeating unit.] 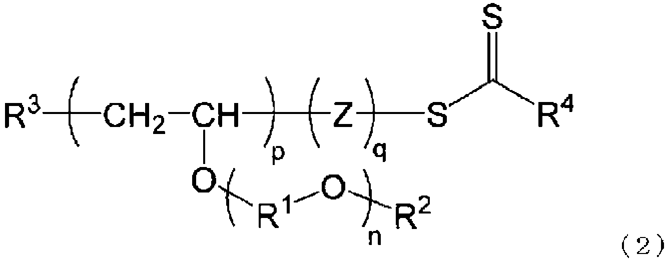 [In Formula (2),
      Z represents a repeating unit derived from the hydrophobic monomer,
      q represents the number of repetitions of the repeating unit derived from the hydrophobic monomer, and
      R¹, R², R³, R⁴, n, and p have the same meaning as described above.]
<2> The production method according to <1>, in which the hydrophobic monomer is one or more hydrophobic monomers selected from the group consisting of an aromatic vinyl-based hydrophobic monomer, a (meth)acrylic acid ester-based hydrophobic monomer, an N-substituted (meth)acrylamide-based hydrophobic monomer, an olefin-based hydrophobic monomer, a (meth)acrylonitrile-based hydrophobic monomer, an N-vinyl group-containing heterocyclic hydrophobic monomer, a halogenated vinyl-based hydrophobic monomer, and a vinyl carboxylic acid-based hydrophobic monomer.
<3> The production method according to <1>, in which the hydrophobic monomer is a hydrophobic conjugated monomer.
<4> The production method according to <1>, in which the hydrophobic monomer is one or more hydrophobic monomers selected from the group consisting of an aromatic vinyl-based hydrophobic monomer, a (meth)acrylic acid ester-based hydrophobic monomer, and an N-substituted (meth)acrylamide-based hydrophobic monomer.
<5> The production method according to any one of <1> to <5>, in which R³ is -C(R⁵)(R⁶)-CN, -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, or -C(R¹⁹)(CN)-(CH₂)_{d}-OH.
<6> The production method according to any one of <1> to <5>, in which R⁴ is -N(R²⁹)(R³⁰), -N(R³¹)(X⁵), -N(X⁶)(X⁷), -N(R³²X⁸)(R³³X⁹), or -N(X¹⁰)(R³⁴X¹¹).
<7> The production method according to any one of <1> to <6>, in which the block copolymer is a fine particle block copolymer.
<8> A fine particle (hereinafter also referred to as "fine particle of the present invention") containing the block copolymer (2).
<9> The fine particle according to <8>, in which the hydrophobic monomer is a hydrophobic conjugated monomer.
<10> A photopolymerization initiator (hereinafter also referred to as "photopolymerization initiator of the present invention") containing a vinyl ether-based polymer (1).
<11> The photopolymerization initiator according to <10>, which is a photo-RAFT polymerization initiator.

### Advantageous Effects of Invention

According to the production method of the present invention and the photopolymerization initiator of the present invention, a block copolymer of a vinyl ether-based monomer and a wide variety of hydrophobic monomers can be easily produced at low cost.

The fine particles of the present invention can be easily produced at low cost while having a segment composed of repetitions of repeating units derived from a vinyl ether-based monomer and a segment composed of repetitions of repeating units derived from a hydrophobic monomer.

### Brief Description of Drawings

Fig. 1 is a diagram of a GPC chromatogram showing synthesis of a block copolymer obtained in Example 1**.**
Fig. 2 is a diagram of a GPC chromatogram showing the synthesis of a block copolymer obtained in Example 2.
Fig. 3 is a diagram of a GPC chromatogram showing the synthesis of a block copolymer obtained in Example 3.
Fig. 4 is a diagram of a GPC chromatogram showing the synthesis of a block copolymer obtained in Example 4**.**
Fig. 5 is a diagram of a GPC chromatogram showing the synthesis of a block copolymer obtained in Example 5.
Fig. 6 is a diagram of a GPC chromatogram showing the synthesis of a block copolymer obtained in Example 6.
Fig. 7 is a view showing AFM images of fine particles obtained in Example 7.
Fig. 8 is a view showing AFM images of fine particles obtained in Example 8.
Fig. 9 is a view showing AFM images of fine particles obtained in Example 9.

### Description of Embodiments

### [Method for Producing Block Copolymer]

The production method of the present invention includes a step of photopolymerizing a hydrophobic monomer by irradiating the hydrophobic monomer with light in the presence of a vinyl ether-based polymer represented by the following Formula (1). By this step, a block copolymer represented by the following Formula (2) is obtained. In the present specification, the "vinyl ether-based polymer" means a polymer having at least a repeating unit derived from a vinyl ether-based monomer.

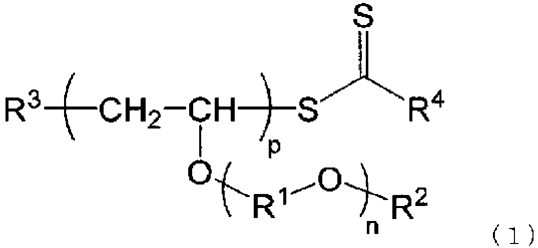

[In Formula (1),
R¹ represents an alkanediyl group having 1 to 5 carbon atoms,
R² represents a hydrogen atom or an alkyl group having 1 to 3 carbon atoms,
R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶) (R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
n represents an integer from 1 to 10, and
p represents the number of repetitions of a repeating unit.]

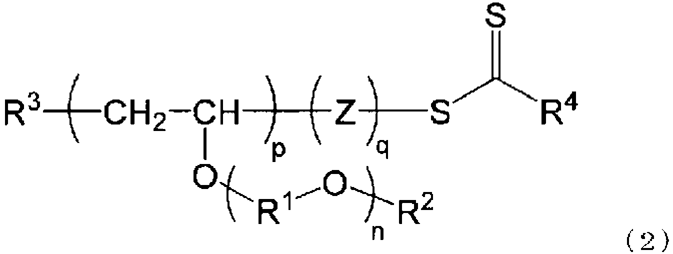

[In Formula (2),
Z represents a repeating unit derived from the hydrophobic monomer,
q represents the number of repetitions of the repeating unit derived from the hydrophobic monomer, and
R¹, R², R³, R⁴, n, and p have the same meaning as described above.]

Each symbol in Formulae (1) and (2) will be described.

In the Formulae (1) and (2), R¹ represents an alkanediyl group having 1 to 5 carbon atoms.

The alkanediyl group represented by R¹ may be linear or branched. The number of carbon atoms of the alkanediyl group represented by R¹ is preferably 1 to 4, and more preferably 2 or 3.

Examples of the alkanediyl group represented by R¹ include a methane-1,1-diyl group, an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, a butane-1,4-diyl group, and a pentane-1,5-diyl group.

Among them, the alkanediyl group represented by R¹ is preferably an ethane-1,2-diyl group or a propane-1,2-diyl group, and more preferably an ethane-1,2-diyl group.

In the Formulae (1) and (2), n represents an integer from 1 to 10. However, it is preferably an integer from 1 to 6, more preferably an integer from 1 to 4, and particularly preferably an integer from 1 to 3. When n is an integer from 2 to 10, n R¹'s may be the same as or different from each other.

In the Formulae (1) and (2), R² represents a hydrogen atom or an alkyl group having 1 to 3 carbon atoms.

The alkyl group represented by R² may be linear or branched. The number of carbon atoms of the alkyl group represented by R² is preferably 1 or 2. Specific examples thereof include a methyl group, an ethyl group, a n-propyl group, and an isopropyl group. Among them, a methyl group and an ethyl group are preferable, and a methyl group is more preferable.

Among them, R² is preferably a hydrogen atom from the viewpoint of availability.

In the Formulae (1) and (2), R³ represents -C(R⁵)(R⁶)-CN, -C(R⁷)(R⁸)-X¹, -C(R⁹)(R¹⁰)(R¹¹), -C(R¹²)(R¹³)-(CH₂)ₐ-COOR¹⁴, -C(R¹⁵)(X²)-(CH₂)_{b}-COO_{R}¹⁶, -C(R¹⁷)(CN)-(CH₂)_{c}-COOR¹⁸, - C(R¹⁹)(CN)-(CH₂)_{d}-OH, -C(R²⁰)(R²¹)-CON(R²²)H, or -C(R²³)(R²⁴)-CON(R²⁵)(R²⁶). Among them, from the viewpoint of availability, R³ is preferably -C(R⁵)(R⁶)-CN, -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, or -C(R¹⁹)(CN)-(CH₂)_{d}-OH, more preferably - C(R¹⁷)(CN)-(CH₂)_{c}-COOR¹⁸, or -C(R¹⁹)(CN)-(CH₂)_{d}-OH, or - C(R⁵)(R⁶)-CN, and particularly preferably -C(R⁵)(R⁶)-CN.

In the Formulae (1) and (2), R⁴ represents -S-R²⁷, -S-X³, -S-R²⁸-X⁴, -N(R²⁹)(R³⁰), -N(R³¹)(X⁵), -N(X⁶)(X⁷), - N(R³²X⁸)(R³³X⁹), or -N(X¹⁰)(R³⁴X¹¹). Among them, from the viewpoint of availability, R⁴ is preferably -N(R²⁹)(R³⁰), - N(R³¹)(X⁵), -N(X⁶)(X⁷), -N(R³²X⁸)(R³³X⁹), or -N(X¹⁰)(R³⁴X¹¹), more preferably -N(R²⁹)(R³⁰), -N(R³¹)(X⁵), or -N(X⁶)(X⁷), and particularly preferably -N(R³¹)(X⁵).

R⁵ to R²¹, R²³, and R²⁴ each independently represent a hydrogen atom or a substituted or unsubstituted alkyl group having 1 to 12 carbon atoms, and a hydrogen atom is preferable. R²², R²⁵, and R²⁶ each independently represent a substituted or unsubstituted alkyl group having 1 to 12 carbon atoms.

R²⁷ and R²⁹ to R³¹ each independently represent a substituted or unsubstituted alkyl group having 1 to 12 carbon atoms.

The alkyl group represented by R⁵ to R²⁶, R²⁷, and R²⁹ to R³¹ may be linear or branched. The number of carbon atoms of the alkyl group represented by R⁵ to R²⁶, R²⁷, and R²⁹ to R³¹ is preferably 1 to 8, more preferably 1 to 4, and particularly preferably 1 or 2. Specific examples thereof include a methyl group, an ethyl group, a n-propyl group, an isopropyl group, a n-butyl group, an isobutyl group, a sec-butyl group, a tert-butyl group, a n-pentyl group, a n-hexyl group, a 2-methylpentyl group, a 1,3-dimethylbutyl group, a 1,1,2-trimethylpropyl group, a n-heptyl group, a n-octyl group, an isooctyl group, a 2-ethylhexyl group, a n-decyl group, and a n-dodecyl group. Among them, a methyl group, an ethyl group, an n-propyl group, an isopropyl group, an n-butyl group, an isobutyl group, a sec-butyl group, and a tert-butyl group are preferable, and a methyl group and an ethyl group are more preferable.

In -N(R²⁹)(R³⁰), R²⁹ and R³⁰ may form a heterocyclic ring together with an adjacent nitrogen atom. Examples of the heterocyclic ring include a pyrrole ring, an imidazole ring, a pyridine ring, an indole ring, and a pyrimidine ring.

R²⁸ and R³² to R³⁴ each independently represent a substituted or unsubstituted alkanediyl group having 1 to 12 carbon atoms.

The alkanediyl group represented by R²⁸ and R³² to R³⁴ may be linear or branched. The number of carbon atoms of the alkanediyl group represented by R²⁸ and R³² to R³⁴ is preferably 1 to 4, and more preferably 1 or 2. Examples of the alkanediyl group represented by R²⁸ and R³² to R³⁴ include the same groups as the alkanediyl group represented by R¹.

X¹ and X² and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group.

Among them, X¹ to X¹¹ are preferably a substituted or unsubstituted phenyl group, a substituted or unsubstituted naphthyl group, or a substituted or unsubstituted pyridyl group, and more preferably a substituted or unsubstituted phenyl group.

a to d each independently represent an integer from 0 to 8, preferably 0 to 4, and more preferably 0 to 2.

Examples of the substituents in R⁵ to R³⁴ and X¹ to X¹¹ include halogen atoms such as a fluorine atom, a chlorine atom, a bromine atom, and an iodine atom; and a haloalkyl group. The substitution position and the number of substituents are optional, and when having two or more substituents, the substituents may be the same or different.

In Formulae (1) and (2), p represents the number of repetitions (polymerization degree) of a repeating unit.

As p, an integer from 5 to 1,000 is preferable, an integer from 10 to 500 is more preferable, and an integer from 20 to 300 is particularly preferable from the viewpoint of fine particle formation and expression of a function as a polymer.

The number of repetitions (degree of polymerization) of the repeating unit in the present specification can be determined, for example, as a number average molecular weight in terms of polystyrene by gel permeation chromatography (GPC) analysis (developing solvent: 10 mmol/L N,N-dimethylformamide containing lithium bromide).

In Formula (2), Z represents a repeating unit derived from a hydrophobic monomer. In the present specification, the "hydrophobic monomer" means a monomer having solubility in water of less than 1 wt%.

Examples of the hydrophobic monomer include one or more hydrophobic monomers selected from the group consisting of an aromatic vinyl-based hydrophobic monomer, a (meth)acrylic acid ester-based hydrophobic monomer, an N-substituted (meth)acrylamide-based hydrophobic monomer, an olefin-based hydrophobic monomer, a (meth)acrylonitrile-based hydrophobic monomer, an N-vinyl group-containing heterocyclic hydrophobic monomer, a halogenated vinyl-based hydrophobic monomer, and a vinyl carboxylic acid-based hydrophobic monomer. These hydrophobic monomers can be used singly or in combination of two or more types thereof.

The hydrophobic monomer is preferably a hydrophobic conjugated monomer, more preferably one or more hydrophobic monomers selected from the group consisting of an aromatic vinyl-based hydrophobic monomer, a (meth)acrylic acid ester-based hydrophobic monomer, and an N-substituted (meth)acrylamide-based hydrophobic monomer, and particularly preferably one or more hydrophobic monomers selected from the group consisting of an aromatic vinyl-based hydrophobic monomer and a (meth)acrylic acid ester-based hydrophobic monomer.

According to the present invention, even when a hydrophobic conjugated monomer is used as the hydrophobic monomer, a block copolymer can be easily produced at low cost. When a hydrophobic conjugated monomer (preferably, one or more hydrophobic monomers selected from the group consisting of an aromatic vinyl-based hydrophobic monomer and a (meth)acrylic acid ester-based hydrophobic monomer) is used, a fine particle block copolymer is easily obtained, and a stable polymer in which no hemiacetal dithioester is present at the terminal can be obtained.

Examples of the aromatic vinyl-based hydrophobic monomer include styrene-based hydrophobic monomers such as styrene, α-methylstyrene, 2-methylstyrene, 3-methylstyrene, 4-methylstyrene, 2,4-dimethylstyrene, 2,4,6-trimethylstyrene, ethylvinylbenzene, 2-n-butylstyrene, 3-n-butylstyrene, 4-n-butylstyrene, 2-tert-butylstyrene, 3-tert-butylstyrene, 4-tert-butylstyrene, 2-tert-butoxystyrene, 3-tert-butoxystyrene, 4-tert-butoxystyrene, and halogenated styrene; and vinyl naphthalene-based hydrophobic monomers such as 1-vinylnaphthalene and **2-**vinylnaphthalene are preferable, and styrene-based hydrophobic monomers are more preferable.

As the (meth)acrylic acid ester-based hydrophobic monomer, a (meth)acrylic acid alkyl-based hydrophobic monomer is preferable, a (meth)acrylic acid C₁₋₈ alkyl-based hydrophobic monomer is more preferable, and a (meth)acrylic acid C₁₋₄ alkyl-based hydrophobic monomer is particularly preferable. Examples thereof include (meth)acrylic acid methyl, (meth)acrylic acid ethyl, (meth)acrylic acid n-propyl, (meth)acrylic acid isopropyl, (meth)acrylic acid n-butyl, (meth)acrylic acid isobutyl, (meth)acrylic acid tert-butyl, and (meth)acrylic acid 2-ethylhexyl.

As the N-substituted (meth)acrylamide-based hydrophobic monomer, an N-alkyl (meth)acrylamide-based hydrophobic monomer and an N,N-dialkyl (meth)acrylamide-based hydrophobic monomer are preferable, an N-C₁₋₁₀ alkyl (meth)acrylamide-based hydrophobic monomer and an N,N-diC₁₋₁₀ alkyl (meth)acrylamide-based hydrophobic monomer are more preferable, and an N-C₁₋₆ alkyl (meth)acrylamide-based hydrophobic monomer and an N,N-diC₁₋₆ alkyl (meth)acrylamide-based hydrophobic monomer are particularly preferable. Examples thereof include N-methyl (meth)acrylamide, N-ethyl (meth)acrylamide, N-isopropyl (meth)acrylamide, N,N-dimethyl (meth)acrylamide, and N,N-diethyl (meth)acrylamide.

The olefin-based hydrophobic monomer may be a linear olefin-based hydrophobic monomer or a cyclic olefin-based hydrophobic monomer. Examples thereof include ethylene, propylene, isoprene, 1,3-butadiene, hexene, octene, cyclohexene, cyclooctene, and vinylcyclohexene.

Examples of the (meth)acrylonitrile-based hydrophobic monomer include (meth)acrylonitrile.

Examples of the N-vinyl group-containing heterocyclic hydrophobic monomer include N-vinylpyrrolidone, N-vinylcaprolactam, N-vinylindole, N-vinylphthalimide, and N-vinylcarbazole.

Examples of the vinyl halide-based hydrophobic monomer include vinyl chloride and vinylidene chloride.

As the vinyl carboxylic acid-based hydrophobic monomer, a saturated aliphatic carboxylate vinyl ester-based hydrophobic monomer is preferable. Examples thereof include vinyl acetate, vinyl propionate, vinyl hexanoate, and vinyl laurate.

In Formula (2), q represents the number of repetitions (polymerization degree) of a repeating unit derived from a hydrophobic monomer.

As q**,** an integer from 5 to 1,000 is preferable, an integer from 10 to 500 is more preferable, and an integer from 20 to 300 is particularly preferable from the viewpoint of fine particle formation and expression of a function as a polymer.

As the vinyl ether-based polymer (1), a commercially available product may be used, or a product obtained by synthesis according to a known method may be used. For example, the vinyl ether-based polymer (1) can be synthesized by the method described in JP 2016-210887 A. Specifically, the vinyl ether-based polymer (1) can be synthesized by living radical polymerization of a compound represented by the following Formula (4) (hereinafter also referred to as "compound (4)") in the presence of a compound represented by the following Formula (3) (hereinafter also referred to as "compound (3)") and a radical polymerization initiator. The compound represented by Formula (3) acts as a chain transfer agent.

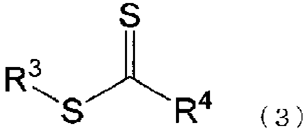

[In Formula (3), R³ and R⁴ have the same meaning as described above.]

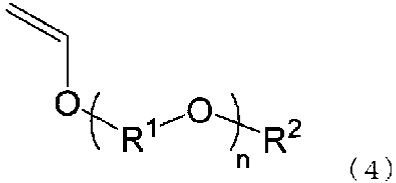

[In Formula (4), R¹, R², and n have the same meaning as described above.]

Examples of the compound (4) include 2-hydroxyethyl vinyl ether, 3-hydroxypropyl vinyl ether, propylene glycol monovinyl ether, 1-hydroxypropane-2-yl vinyl ether, 4-hydroxybutyl vinyl ether, diethylene glycol monovinyl ether, dipropylene glycol monovinyl ether, triethylene glycol monovinyl ether, 2-methoxyethyl vinyl ether, 2-ethoxyethyl vinyl ether, 2-(2-methoxyethoxy)ethyl vinyl ether, 2-(2-ethoxyethoxy)ethyl vinyl ether, 2-(2-(2-methoxyethoxy)ethoxy)ethyl vinyl ether, and 2-(2-(2-ethoxyethoxy)ethoxy)ethyl vinyl ether. The compound (4) can be used singly or in combination of two or more types thereof.

Among them, 2-hydroxyethyl vinyl ether, diethylene glycol monovinyl ether, 2-methoxyethyl vinyl ether, and 4-hydroxybutyl vinyl ether are preferable, 2-hydroxyethyl vinyl ether, diethylene glycol monovinyl ether, and 2-methoxyethyl vinyl ether are more preferable, and 2-hydroxyethyl vinyl ether is particularly preferable.

Examples of the compound (3) include S-cyanomethyl-N-methyl-N-phenylcarbamodithioate, S-cyanomethyl-N,N-diphenylcarbamodithioate, S-2-cyanopropane-2-yl-N-methyl-N-(4-pyridyl)carbamodithioate, S-cyanomethyl-N-methyl-N-(4-pyridyl)carbamodithioate, methyl 2-[N-methyl-N(4-pyridyl) carbamothioylthio]propanoate, and benzyl 1H-pyrrole-1-carbodithioate. These chain transfer agents may be used alone or in combination of two or more thereof.

Among these chain transfer agents, S-cyanomethyl-N-methyl-N-phenylcarbamodithioate, S-cyanomethyl-N,N-diphenylcarbamodithioate, and benzyl 1H-pyrrole-1-carbodithioate are preferable, and S-cyanomethyl-N-methyl-N-phenylcarbamodithioate is more preferable from the viewpoint of good reactivity and easy polymerization control.

The use amount of the chain transfer agent is usually in the range of 0.001 to 20 parts by mol, preferably in the range of 0.01 to 10 parts by mol, and more preferably in the range of 0.1 to 5 parts by mol, based on 100 parts by mol of the compound (4).

Examples of the radical polymerization initiator include an azo-based radical polymerization initiator and a peroxide-based radical polymerization initiator.

Examples of the azo-based radical polymerization initiator include oil-soluble azo-based radical polymerization initiators such as 2,2'-azobis(isobutyronitrile), 2,2'-azobis(4-methoxy-2,4-dimethylvaleronitrile), 2,2'-azobis(2,4-dimethylvaleronitrile), dimethyl 2,2'-azobis(2-methylpropionate), 2,2'-azobis(2-methylbutyronitrile), 1,1'-azobis(cyclohexanecarbonitrile), 2,2'-azobis[N-(2-propenyl)-2-methylpropionamide], and 2,2'-azobis[N-butyl-2-methylpropionamide]; and water-soluble azo-based radical polymerization initiators such as 2,2'-azobis[2-(2-imidazoline-2-yl)propane]dihydrochloride, 2,2'-azobis[2-(2-imidazoline-2-yl)propane]disulfate dihydrate, 2,2'-azobis(2-methylpropionamide)dihydrate, 2,2'-azobis[N-(2-carboxyethyl)-2-methylpropionamide]tetrahydrate, 2,2'-azobis[2-(2-imidazoline-2-yl)propane], 2,2'-azobis[2-methyl-N-(2-hydroxyethyl)propionamide], and 2,2'-azobis[1-imino-1-pyrrolidino-2-methylpropane]dihydrochloride.

Examples of the peroxide-based radical polymerization initiator include t-butyl hydroperoxide, cumene hydroperoxide, t-butyl peroxyacetate, t-butyl peroxybenzoate, t-butyl peroxyoctanoate, t-butyl peroxyneodecanoate, t-butyl peroxyisobutyrate, lauroyl peroxide, t-amyl peroxypivalate, t-butyl peroxypivalate, dicumyl peroxide, benzoyl peroxide, potassium persulfate, and ammonium persulfate.

The radical polymerization initiator may be used singly or in combination of two or more types thereof.

The use amount of the radical polymerization initiator is not particularly limited. However, it is usually in the range of 0.001 to 20 parts by mol, preferably in the range of 0.01 to 10 parts by mol, and more preferably in the range of 0.05 to 5 parts by mol, based on 100 parts by mol of the compound (4).

The living radical polymerization can be carried out in the presence or absence of a solvent.

Examples of the solvent include water; monoalcohols such as methanol, ethanol, isopropanol, n-butyl alcohol, isobutyl alcohol, tert-butyl alcohol, sec-butyl alcohol, and tetrahydrofurfuryl alcohol; polyhydric alcohols such as ethylene glycol, glycerin, and diethylene glycol; ether alcohols such as methyl cellosolve, cellosolve, isopropyropyl cellosolve, butyl cellosolve, ethylene glycol monomethyl ether, ethylene glycol monoethyl ether, diethylene glycol monomethyl ether, and diethylene glycol monoethyl ether; alkylamides such as dimethylformamide, dimethylacetamide, and N-methylpyrrolidone; alkyl sulfoxides such as dimethyl sulfoxide; ketones such as acetone and methyl ethyl ketone; and cyclic ethers such as tetrahydrofuran and dioxane. These solvents can be used singly or in combination of two or more types thereof.

The use amount of the solvent is not particularly limited. However, it is usually 10 to 1,000 parts by mass, and preferably 20 to 500 parts by mass, based on 100 parts by mass of the compound (4).

The polymerization temperature for living radical polymerization is preferably -20°C to 200°C, and more preferably 40°C to 160°C. The polymerization time is usually 1 to 144 hours, and preferably 3 to 108 hours.

The number average molecular weight (Mn) of the vinyl ether-based polymer (1) in terms of polystyrene by GPC analysis is usually 1,000 to 1 million, preferably 1,500 to 500,000, and more preferably 2,000 to 200,000. The molecular weight distribution (Mw/Mn) is usually 1.0 to 2.0, preferably 1.0 to 1.8, and more preferably 1.0 to 1.6. The number average molecular weight of the vinyl ether-based polymer (1) can be adjusted by the use amounts of the compound (3) and the radical initiator.

Next, the photopolymerization step will be described in detail. The photopolymerization step is a step of photopolymerizing a hydrophobic monomer by irradiating the hydrophobic monomer with light in the presence of the vinyl ether-based polymer (1).

Examples of the hydrophobic monomer include those that give a repeating unit derived from a hydrophobic monomer represented by Z.

The vinyl ether-based polymer (1) acts as a photopolymerization initiator (preferably, a photo-RAFT polymerization initiator). As the vinyl ether-based polymer (1), a polymer obtained by living radical polymerization may be used as it is, or a polymer isolated from a reaction liquid may be used.

The use amount of the vinyl ether-based polymer (1) is not particularly limited. However, it is usually in the range of 1 to 10,000 parts by mol, preferably in the range of 5 to 5,000 parts by mol, and more preferably in the range of 10 to 1,000 parts by mol, based on 100 parts by mol of the hydrophobic monomer.

Examples of the light to be emitted include ultraviolet rays, visible rays, X-rays, and the like, and ultraviolet rays are preferable.

Examples of the ultraviolet irradiation device include a low pressure mercury lamp, a medium pressure mercury lamp, a high pressure mercury lamp, an ultra high pressure mercury lamp, a metal halide lamp, a black light lamp, a UV electrodeless lamp, and an LED.

The irradiation intensity is usually 0.1 to 100 mW/cm², and preferably 0.5 to 20 mW/cm².

The photopolymerization step can be performed by a general polymerization method such as a bulk polymerization method, a dispersion polymerization method, an emulsion polymerization method, a solution polymerization method, or a suspension polymerization method.

The photopolymerization step can be performed in the presence or absence of a solvent or a dispersion medium. However, it is preferably performed in the presence of a solvent or a dispersion medium.

Examples of the solvent or dispersion medium include water; monoalcohols such as methanol, ethanol, isopropanol, n-butyl alcohol, isobutyl alcohol, tert-butyl alcohol, sec-butyl alcohol, and tetrahydrofurfuryl alcohol; polyhydric alcohols such as ethylene glycol, glycerin, and diethylene glycol; ether alcohols such as methyl cellosolve, cellosolve, isopropyropyl cellosolve, butyl cellosolve, ethylene glycol monomethyl ether, ethylene glycol monoethyl ether, diethylene glycol monomethyl ether, and diethylene glycol monoethyl ether; alkylamides such as dimethylformamide, dimethylacetamide, and N-methylpyrrolidone; alkyl sulfoxides such as dimethyl sulfoxide; ketones such as acetone and methyl ethyl ketone; and cyclic ethers such as tetrahydrofuran and dioxane. These solvents and dispersion media can be used singly or in combination of two or more types thereof.

The use amount of the solvent or dispersion medium is not particularly limited. However, it is usually 50 to 2,000 parts by mass, and preferably 100 to 1,000 parts by mass, based on 100 parts by mass of the hydrophobic monomer.

When photopolymerization is performed by an emulsion polymerization method, the photopolymerization step is preferably performed in the presence of water. It can also be carried out in the presence of an emulsifier together with water.

Examples of the emulsifier include: anionic surfactants such as sodium laurate, polyoxyethylene methyl ether carboxylic acid sodium, sodium 2-ethylhexyl sulfate ester, sodium dioctyl sulfosuccinate, sodium polyacrylate, and sodium polymethacrylate; cationic surfactants such as alkyltrimethylammonium salts and alkylbenzylammonium chloride; nonionic surfactants such as polyoxyethylene alkyl ethers, polyvinyl alcohol, poly-N-vinylpyrrolidone, and polyethylene glycol monomethacrylate; and amphoteric surfactants such as alkyldimethylaminoacetic acid betaine and alkanoylamidopropyl dimethylglycine. The emulsifier can be used singly or in combination of two or more types thereof.

The use amount of the emulsifier is not particularly limited. However, it is usually 1 to 400 parts by mass, and preferably 10 to 100 parts by mass, based on 100 parts by mass of the hydrophobic monomer.

When photopolymerization is performed by a dispersion polymerization method, the photopolymerization step is preferably performed in the presence of a dispersion medium, more preferably in the presence of a dispersion medium and a dispersion stabilizer.

Examples of the dispersion stabilizer include polyvinyl alcohol, partially saponified polyvinyl alcohol, polyoxyethylene alkyl ether, and poly N-vinylpyrrolidone. The dispersion stabilizer can be used singly or in combination of two or more types thereof.

The polymerization temperature for photopolymerization is preferably 10 to 160°C, and more preferably 15 to 120°C, from the viewpoint of reaction efficiency. The polymerization time is usually 0.5 to 96 hours, and preferably 1 to 72 hours.

As a polymerization method, polymerization can be performed by any method such as a batch polymerization method, a semi-batch polymerization method, or a continuous polymerization method.

The reaction product obtained in the photopolymerization step may be purified as necessary.

Further, according to the production method of the present invention, a block copolymer of a vinyl ether-based monomer and a wide variety of hydrophobic monomers can be easily produced and at low cost. In addition, when the vinyl ether-based polymer (1) is prepared by living radical polymerization, the vinyl ether-based polymer (1) can be used in the photopolymerization step without being subjected to a purification treatment, and thus is industrially very useful.

In particular, even when a hydrophobic conjugated monomer is used as the hydrophobic monomer, the block copolymer can be easily produced at low cost, and the block copolymer obtained in this manner is useful as a polymeric surfactant, a thermoplastic elastomer, a coating material, an adhesive, a template agent for lithography, a surface modifier, and the like.

The number average molecular weight (Mn) of the block copolymer (2) in terms of polystyrene by GPC analysis is usually 1,000 to 500,000, preferably 2,500 to 200,000, and more preferably 5,000 to 100,000. The molecular weight distribution (Mw/Mn) is usually 1.0 to 4.0, preferably 1.0 to 5.0, and more preferably 1.0 to 4.5**.**

The block copolymer (2) is preferably a fine particle block copolymer. In the case of being a fine particle, it is useful as a cosmetic material or the like.

### [Fine Particles]

The fine particles of the present invention contain the block copolymer (2).

In the fine particles of the present invention, each symbol in Formula (2) has the same meaning as described above. That is, the hydrophobic monomer that gives the repeating unit represented by Z in Formula (2) is preferably a hydrophobic conjugated monomer, more preferably one or more hydrophobic monomers selected from the group consisting of an aromatic vinyl-based hydrophobic monomer, a (meth)acrylic acid ester-based hydrophobic monomer, and an N-substituted (meth)acrylamide-based hydrophobic monomer, and particularly preferably one or more hydrophobic monomers selected from the group consisting of an aromatic vinyl-based hydrophobic monomer and a (meth)acrylic acid ester-based hydrophobic monomer.

The average particle diameter (Dh) of the fine particles of the present invention is preferably 1 to 1,000 nm, more preferably 5 to 500 nm, and particularly preferably 10 to 300 nm from the viewpoint of having a size capable of being dispersed in a solvent or a dispersion medium.

The particle diameter distribution (PDI) is preferably 0.01 to 0.8, more preferably 0.01 to 0.65, and particularly preferably 0.01 to 0.5 from the viewpoint of uniformity.

The coefficient of variation (CV) is preferably 0 to 20%, more preferably 0 to 10%, and particularly preferably 0 to 5%, from the viewpoint of reproducibility in particle diameter measurement.

In the present specification, the average particle diameter means a volume average particle diameter measured by a dynamic light scattering method, and the average particle diameter, particle diameter distribution (PDI), and coefficient of variation (CV) can be specifically measured by a method described in Examples described later.

Further, the fine particles of the present invention can be easily produced at low cost while having a segment composed of repetitions of repeating units derived from a vinyl ether-based monomer and a segment composed of repetitions of repeating units derived from a hydrophobic monomer. In addition, the vinyl ether unit has a characteristic of low cytotoxicity. Therefore, the fine particles of the present invention are useful as a cosmetic material or the like.

### [Photopolymerization Initiator]

The photopolymerization initiator of the present invention contains a vinyl ether-based polymer (1).

According to the photopolymerization initiator of the present invention, a block copolymer of a vinyl ether-based monomer and a wide variety of hydrophobic monomers can be easily produced at low cost. The photopolymerization initiator of the present invention is particularly useful as a photo-RAFT polymerization initiator.

### Examples

Hereinafter, the present invention will be described in detail with reference to Examples. However, the present invention is not limited to these Examples.

### <GPC Measurement>

Mn and Mw/Mn were analyzed using polystyrene equivalent GPC. The analysis conditions were as follows: column: TSKgel column G-MHHR-M × 2 (manufactured by Tosoh Corporation), solvent: N,N-dimethylformamide (containing 10 mmol/L lithium bromide), measurement temperature: 40°C, and flow rate: 1.0 mL/min.

### <¹H NMR Measurement >

¹H NMR measurement was performed using JNM-ECX500 II manufactured by JEOL Ltd. The monomer conversion rate (referring to the proportion of monomers incorporated into the polymer by the polymerization reaction relative to the total amount of monomers initially present) was obtained by dissolving the reaction solution after polymerization in a solvent capable of uniformly dissolving the reaction solution (deuterium oxide, deuterated methanol, deuterated dimethyl sulfoxide, or deuterated chloroform), and calculating from the peak area ratio of the generated polymer and the residual monomer.

### <Measurement of Particle Size by Dynamic Light Scattering (DLS)>

Particle size measurement by DLS was performed at a scattering angle of 173° using Zetasizer Nano-ZSP manufactured by Malvern Instruments Ltd. The measurement data was analyzed by a cumulant method in Zeta Software Ver. 7.02, and the particle diameter (Dₕ) and the particle diameter distribution (PDI) were calculated. In addition, the obtained average particle diameter was a result obtained by 9 or more measurements, and the coefficient of variation (CV) was calculated from the standard deviation of the particle diameter measurement result.

### <Atomic Force Microscope (AFM) Measurement>

The shape of the fine particles was observed using SPM-9600 manufactured by Shimadzu Corporation. A sample (aqueous dispersion of fine particles) was applied onto a mica substrate, and sufficiently air-dried, and the measurement was performed in a dynamic mode. At that time, measurement was performed using a silicon cantilever (OMCL-AC 160TS-C3 manufactured by Olympus Corporation).

### <Preparation Example 1: Synthesis of Poly(2-hydroxyethyl vinyl ether)>

A stirring bar was placed in a test tube, 0.050 g of S-cyanomethyl-N-methyl-N-phenylcarbamodithioate (hereinafter referred to as "CMPCD"), 4.011 g of 2-hydroxyethyl vinyl ether (hereinafter referred to as "HEVE") as a monomer (200 mol times with respect to 1 mol of CMPCD), and 0.021 g of dimethyl 2,2'-azobis(2-methylpropionate) ("V-601" manufactured by FUJIFILM Wako Pure Chemical Corporation) (0.4 mol times with respect to 1 mol of CMPCD) were further added thereto, and the resulting mixture was well stirred. Subsequently, after performing freeze-degassing three times, the test tube was sealed, and the polymerization reaction was initiated in an oil bath at 70°C. After a lapse of 6 hours or 24 hours from the start of the reaction, the polymerization was terminated by cooling and exposure to air, and ¹H NMR analysis and GPC analysis were performed.

In the polymerization for 6 hours, the monomer conversion rate (rate of HEVE as monomer incorporated into polymer by polymerization reaction to total amount of initially present monomers) was 13%, and Mn of the resulting poly(2-hydroxyethyl vinyl ether) (hereinafter referred to as "PHEVE") was 2,100 and Mw/Mn was 1.52.

In addition, in the polymerization for 24 hours, the monomer conversion rate was 21%, the Mn of the resulting PHEVE was 3,800, and the Mw/Mn was 1.40.

### <Preparation Example 2: Synthesis of Poly(diethylene glycol monovinyl ether)>

A polymerization reaction was carried out in the same manner as in Preparation Example 1, except that the monomer was changed to 5.999 g of diethylene glycol monovinyl ether (hereinafter referred to as "DEGV") (200 mol times with respect to 1 mol of CMPCD). After a lapse of 24 hours, the polymerization was terminated by cooling and exposure to air, and ¹H NMR analysis and GPC analysis were performed.

As a result, the monomer conversion rate was 25%, and Mn of the resulting poly(diethylene glycol monovinyl ether) (hereinafter referred to as "PDEGV") was 6,300, and Mw/Mn was 1.46.

### <Preparation Example 3: Synthesis of Poly(2-methoxyethyl vinyl ether)>

A stirring bar was placed in a test tube, and 0.218 g of CMPCD, 20.000 g of 2-methoxyethyl vinyl ether (hereinafter referred to as "MOVE") as a monomer (200 mol times with respect to 1 mol of CMPCD), 0.093 g of V-601 (0.4 mol times with respect to 1 mol of CMPCD), 0.017 g of lithium hydroxide monohydrate (0.4 mol times with respect to 1 mol of CMPCD), and 20.000 g of ultrapure water (manufactured by FUJIFILM Wako Pure Chemical Corporation) were further added and stirred well. Subsequently, after performing freeze-degassing three times, the test tube was sealed, and the polymerization reaction was initiated in an oil bath at 70°C. After a lapse of 72 hours from the start of the reaction, the polymerization was terminated by cooling and exposure to air, and ¹H NMR analysis and GPC analysis were performed.

As a result, the monomer conversion rate was 28%, and Mn of the resulting poly(2-methoxyethyl vinyl ether) (hereinafter referred to as "PMOVE") was 5,500, and Mw/Mn was 1.31.

### <Reference Example 1: Light Irradiation of PHEVE Solution Containing HEVE monomer>

In the test tube after completion of polymerization for 24 hours in Preparation Example 1, unreacted HEVE was contained (3.762 mol% relative to PHEVE) in addition to the generated PHEVE (Mn = 3,800, Mw/Mn = 1.40). After performing freeze-degassing three more times on the solution in the test tube, the test tube was sealed and irradiated with light from a UV-LED (peak wavelength: 365 nm, 14.2 mW/cm²) at room temperature for two days. As a light source, PER-365 (output: 507 mW) manufactured by Techno Sigma Co., Ltd. was directly inserted into a test tube and used (hereinafter, this light source is referred to as "UV-LED"). Thereafter, exposure to air was performed, and ¹H NMR analysis and GPC analysis were performed.

As a result, the PHEVE was exactly the same as that before light irradiation (Mn = 3,800, Mw/Mn = 1.40). As described above, it was confirmed that the remaining unreacted HEVE did not react by light emission in the presence of the PHEVE obtained in Preparation Example 1. Similarly, the PDEGV solution containing DEGV and the PMOVE solution containing MOVE were also irradiated with light for 2 days. However, there was no change.

### <Example 1: Light Irradiation of PHEVE Solution Containing Styrene>

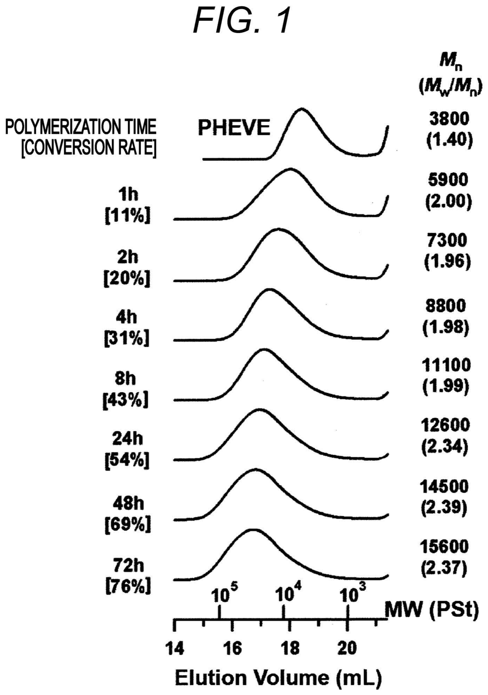

(1) From the test tube after completion of polymerization for 24 hours in Preparation Example 1, 3.377 g of a solution (containing 0.799 g of PHEVE) was collected and placed in a new test tube, and 4.030 g (200 mol% relative to PHEVE) of styrene (hereinafter referred to as "St") and 9.428 g of N,N-dimethylformamide (hereinafter referred to as "DMF") as a solvent were added thereto and dissolved well. Subsequently, after performing freeze-degassing three times, the test tube was sealed, and the light was emitted from an UV-LED at room temperature for three days.
(2) During that time, the reaction solution was withdrawn after a lapse of 1 hour, after a lapse of 2 hours, after a lapse of 4 hours, after a lapse of 8 hours, after a lapse of 24 hours, after a lapse of 48 hours, and after a lapse of 72 hours, the withdrawn solution was exposed to air to stop polymerization, and ¹H NMR analysis and GPC analysis were performed. Since the block copolymer further changed to a high-molecular-weight compound with the lapse of time, and the remaining amount of St decreased, synthesis of a block copolymer composed of PHEVE and polystyrene (hereinafter referred to as "PSt") was confirmed. The analysis results of GPC obtained at each time are shown in Fig. 1.

### <Example 2: Light Emission of PHEVE Solution Containing Vinyl Acetate>

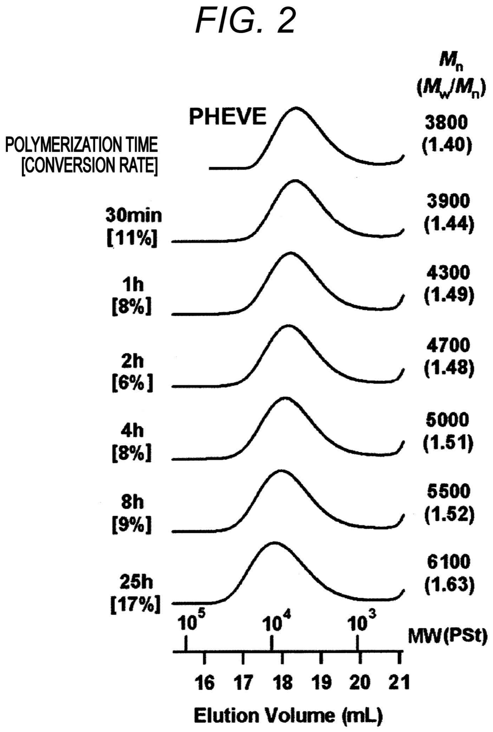

From the test tube after completion of polymerization for 24 hours in Preparation Example 1, a mixed solution containing 0.691 g of PHEVE was collected and placed in a new test tube, and to this, 3.235 g (200 mol% relative to PHEVE) of vinyl acetate and 6.519 g of methanol as a solvent were added and dissolved well. Subsequently, after performing freeze-degassing three times, the test tube was sealed, and the light was emitted from an UV-LED at room temperature for 25 hours. During that time, the reaction solution was withdrawn after a lapse of 1 hour, after a lapse of 2 hours, after a lapse of 4 hours, after a lapse of 8 hours, and after a lapse of 25 hours, the withdrawn solution was exposed to air to stop polymerization, and ¹H NMR analysis and GPC analysis were performed. The block copolymer further changed to a high-molecular-weight compound with the lapse of time, and the residual amount of vinyl acetate decreased, and thus the synthesis of a block copolymer composed of PHEVE and polyvinyl acetate was confirmed. The analysis results of GPC obtained at each time are shown in Fig. 2.

### <Example 3: Light Emission of PHEVE Solution Containing N-Vinylpyrrolidone>

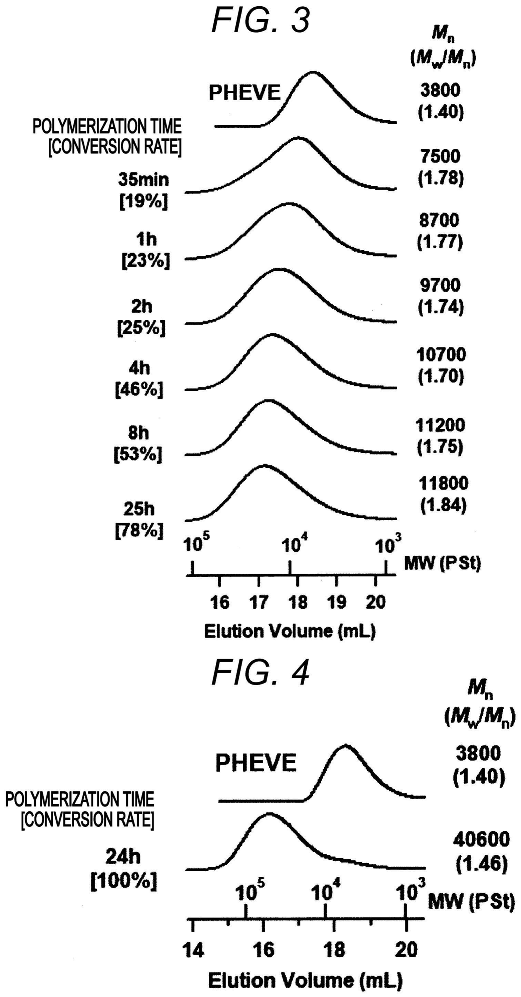

A mixed solution containing 1.100 g of PHEVE was collected from the test tube after completion of polymerization for 24 hours in Preparation Example 1 and put in a new test tube, and 5.914 g (200 mol% relative to PHEVE) of N-vinylpyrrolidone and 3.486 g of methanol as a solvent were added thereto to dissolve the PHEVE well. Subsequently, after performing freeze-degassing three times, the test tube was sealed and immersed in a water bath heated to 70°C, while simultaneously irradiated with light from a UV-LED for 25 hours. During that time, the reaction solution was withdrawn after a lapse of 1 hour, after a lapse of 2 hours, after a lapse of 4 hours, after a lapse of 8 hours, and after a lapse of 25 hours, the withdrawn solution was exposed to air to stop polymerization, and ¹H NMR analysis and GPC analysis were performed. The block copolymer changed to a high molecular weight compound with the lapse of time, and the residual amount of N-vinylpyrrolidone decreased, and thus the synthesis of a block copolymer composed of PHEVE and poly (N-vinylpyrrolidone) was confirmed. The analysis results of GPC obtained at each time are shown in Fig. 3.

### <Example 4: Light Emission of PHEVE Solution Containing N,N-Diethylacrylamide>

From the test tube after completion of polymerization for 24 hours in Preparation Example 1, a mixed solution containing 0.420 g of PHEVE was collected and placed in a new test tube, and to this, 2.580 g (200 mol% relative to PHEVE) of N,N-diethylacrylamide and 10.649 g of methanol as a solvent were added and dissolved well. Subsequently, after performing freeze-degassing three times, the test tube was sealed and irradiated with light from a UV-LED at room temperature for 24 hours, and after this, the reaction was terminated by exposure to air, and ¹H NMR analysis and GPC analysis were performed. From the GPC analysis results of the PHEVE used and the resulting polymer, it was confirmed that the resulting polymer was changed to a higher molecular weight than PHEVE, and all of N,N-diethylacrylamide was polymerized. In this manner, the synthesis of a block copolymer composed of PHEVE and poly(N,N-diethylacrylamide) (Mn = 40,600, Mw/Mn = 1.46) was confirmed. The analysis results of GPC are shown in Fig. 4.

### <Example 5: Light Emission of PHEVE Solution Containing Methyl Methacrylate>

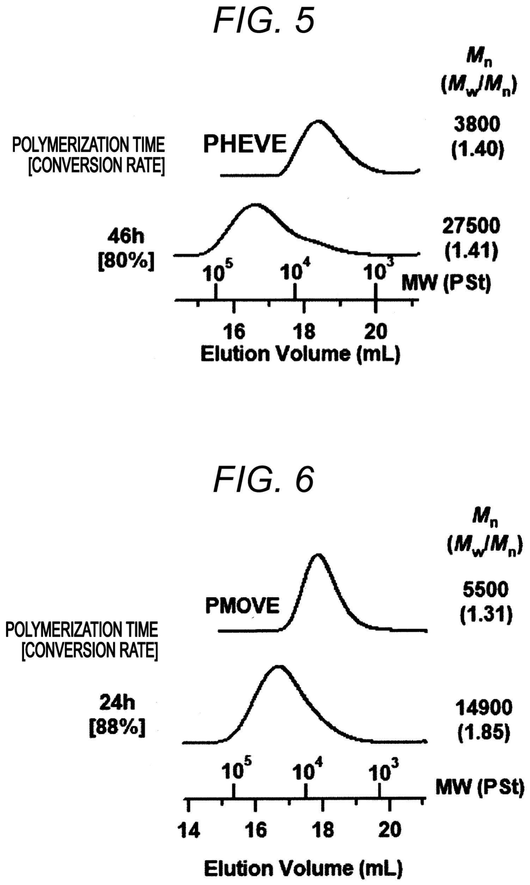

A mixed solution containing 0.478 g of PHEVE was collected from the test tube after completion of polymerization for 24 hours in Preparation Example 1 and put in a new test tube, and 2.526 g (200 mol% relative to PHEVE) of methyl methacrylate (hereinafter referred to as "MMA") and 10.283 g of DMF as a solvent were added and dissolved well. Subsequently, after performing freeze-degassing three times, the test tube was sealed and immersed in a water bath heated to 70°C while simultaneously being irradiated with light from a UV-LED for 46 hours, and after this, the polymerization was terminated by exposure to air, and ¹H NMR analysis and GPC analysis were performed. From the GPC analysis results of the PHEVE used and the resulting polymer, it was confirmed that the resulting polymer was changed to a higher molecular weight than PHEVE, and that MMA had polymerized with a conversion rate of 80%. In this manner, the synthesis of a block copolymer of PHEVE and polymethyl methacrylate (hereinafter referred to as "PMMA") (Mn = 27,500, Mw/Mn = 1.41) was confirmed. The analysis results of GPC are shown in Fig. 5.

### <Example 6: Light Irradiation of PMOVE Solution Containing MMA>

In a test tube, 0.706 g of the PMOVE obtained in Preparation Example 3, 1.894 g (200 mol% relative to PMOVE) of MMA, and 10.401 g of DMF as a solvent were added and dissolved well. Subsequently, after performing freeze-degassing three times, the test tube was sealed and irradiated with light from a UV-LED at room temperature for 24 hours, and after this, the reaction was terminated by exposure to air, and ¹H NMR analysis and GPC analysis were performed. From the GPC analysis results of the PMOVE used and the resulting polymer, it was confirmed that the resulting polymer was changed to a higher molecular weight than PMOVE, and that MMA had polymerized with a conversion rate of 88%. In this manner, the synthesis of a block copolymer of PMOVE and PMMA (Mn = 14,900, Mw/Mn = 1.85) was confirmed. The analysis results of GPC are shown in Fig. 6.

### <Example 7: Production of PHEVE-PSt Copolymer Fine Particles>

Photopolymerization was performed in the same manner as in (1) in Example 1 except that DMF was changed to ethanol, and UV-LED light was emitted for 45.5 hours while stirring at a speed of 600 rpm.

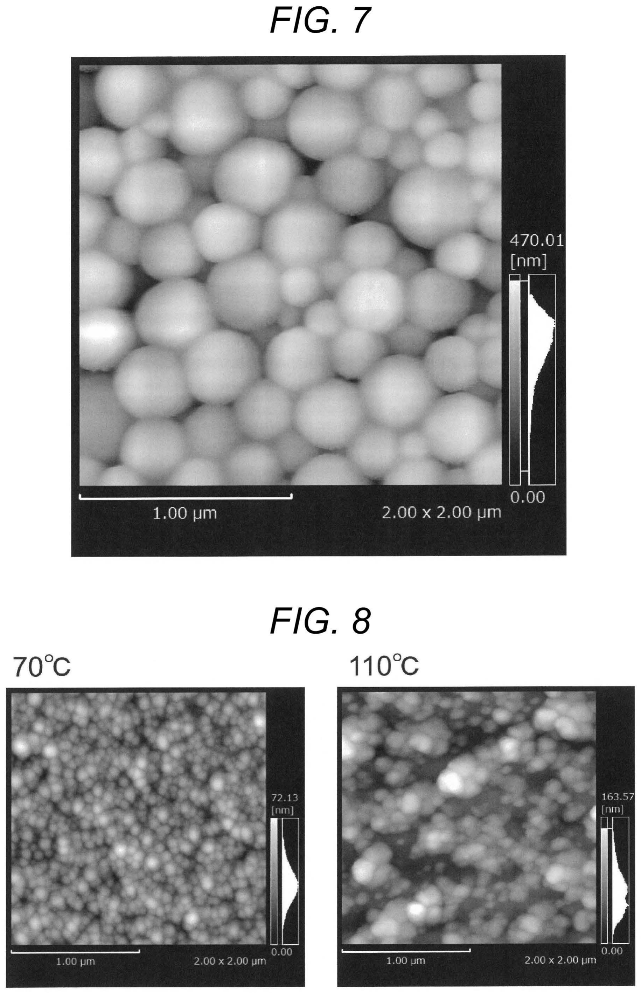

Thereafter, the polymerization was terminated by exposure to air, and DLS measurement, AFM measurement, ¹H NMR analysis, and GPC analysis were performed. From the GPC analysis results of the PHEVE used and the resulting polymer, it was confirmed that the resulting polymer was changed to a higher molecular weight than PHEVE, and that St had polymerized with a conversion rate of 92%. In this manner, the synthesis of a block copolymer of PHEVE and PSt (Mn = 14,300, Mw/Mn = 3.42) was confirmed. Further, the block copolymer was obtained as fine particles having a PSt part as a core and a PHEVE part as a shell in ethanol, and the particle diameter (Dₕ) of the fine particles was 114 nm, the particle diameter distribution (PDI) was 0.413, and the coefficient of variation (CV) was 2.0% as determined from the particle diameter measurement by DLS. The results of AFM observation of the resulting fine particles are shown in Fig. 7.

### <Example 8: Production of PDEGV-PSt Copolymer Fine Particles>

(1) In a test tube, 0.145 g of the PDEGV obtained in Preparation Example 2, 0.456 g (200 mol% relative to PDEGV) of St, and 2.399 g of 1-butanol as a solvent were added and dissolved well. Subsequently, after performing freeze-degassing three times, the test tube was sealed and immersed in a water bath heated to 70°C or 110°C, and while stirring at a speed of 600 rpm, was simultaneously irradiated with light from a UV-LED for 24 hours.
(2) Thereafter, the polymerization was terminated by exposure to air, and DLS measurement, AFM measurement, ¹H NMR analysis, and GPC analysis were performed. From the GPC analysis results of the used PDEGV and the resulting polymer, it was confirmed that the resulting polymer was changed to a higher molecular weight than PDEGV, and that St was polymerized with a conversion rate of 91% in the polymerization at 70°C and 81% in the polymerization at 110°C. In this manner, the synthesis of a block copolymer of PDEGV and PSt (polymerization at 70°C: Mn = 24,800, Mw/Mn = 4.02; polymerization at 110°C: Mn = 11,800, Mw/Mn = 2.09) was confirmed. Further, the block copolymer was obtained as fine particles in 1-butanol, and the particle diameter (Dₕ) of the fine particles was 197 nm, the particle diameter distribution (PDI) was 0.031, and the coefficient of variation (CV) was 2.1% in the polymerization at 70°C as determined from the particle diameter measurement by DLS. In addition, in the polymerization at 110°C, the particle diameter (Dₙ) of the fine particles was 149 nm, the particle diameter distribution (PDI) was 0.145, and the coefficient of variation (CV) was 1.2%. The results of AFM observation of the resulting fine particles (height image of 2 µm × 2 µm) are shown in Fig. 8.

### <Example 9: Production of PDEGV-PSt Copolymer Fine Particles in Water>

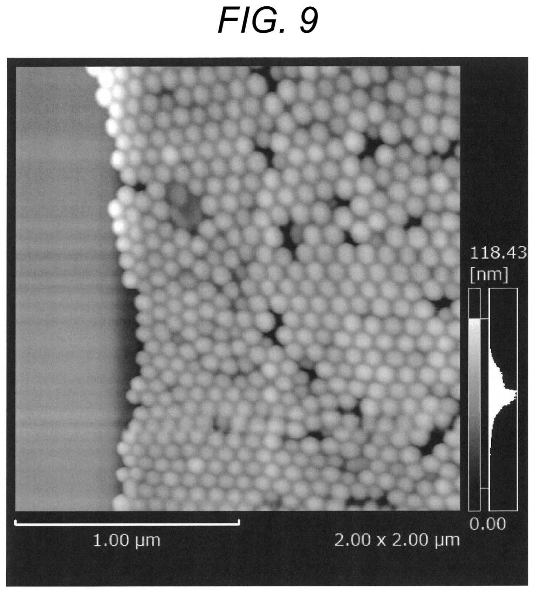

(1) Photopolymerization was performed in the same manner as in (1) in Example 8 except that 1-butanol was changed to ultrapure water and the reaction temperature was changed to only 70°C.
(2) Thereafter, the polymerization was terminated by exposure to air, and DLS measurement, AFM measurement, ¹H NMR analysis, and GPC analysis were performed. From the GPC analysis results of the PDEGV used and the resulting polymer, it was confirmed that the resulting polymer was changed to a higher molecular weight than PDEGV, and that St had polymerized with a conversion rate of 98%. In this manner, the synthesis of a block copolymer of PDEGV and PSt (Mn = 29,000, Mw/Mn = 4.06) was confirmed. Further, the block copolymer was obtained as fine particles having a PSt part as a core and a PDEGV part as a shell in water, and the particle diameter (Dₕ) of the fine particles was 106 nm, the particle size distribution (PDI) was 0.073, and the coefficient of variation (CV) was 1.1% as determined from the particle diameter measurement by DLS. The results of AFM observation of the resulting fine particles (height image of 2 µm × 2 µm) are shown in Fig. 9.

### <Comparative Example 1>

In a test tube, 0.145 g of the PDEGV obtained in Preparation Example 2, 0.456 g (200 mol% relative to PDEGV) of St, 0.002 g (0.4 mol% relative to PDEGV) of V-601, and 2.399 g of ultrapure water as a solvent were added and dissolved well. Subsequently, after performing freeze-degassing three times, the test tube was sealed and stirred at 600 rpm for 24 hours in an oil bath at 70°C.

Thereafter, the resultant was exposed to air, and DLS measurement was performed. As a result, fine particles were not confirmed, and progress of copolymerization reaction was not confirmed.

### <Comparative Example 2>

In a test tube, 0.478 g of the PHEVE obtained in Preparation Example 1, 2.526 g (200 mol% relative to PHEVE) of MMA, 0.012 g (0.4 mol% relative to PHEVE) of V-601, and 10.271 g of DMF as a solvent were added and dissolved well. Subsequently, after performing freeze-degassing three times, the test tube was sealed and stirred for 24 hours in an oil bath at 70°C. Thereafter, when the reaction mixture was dissolved in 50 mL of water by exposure to air, the used PHEVE was recovered as it was, and the progress of the block copolymerization reaction of PHEVE and PMMA could not be confirmed.

As shown in the results of Comparative Examples 1 and 2, when a hydrophobic conjugated monomer such as St or MMA was radically RAFT polymerized using a vinyl ether-based polymer as a macro chain transfer agent, progress of a block copolymerization reaction was not observed.

## Claims

1. A method for producing a block copolymer represented by the following Formula (2), the method comprising a step of photopolymerizing a hydrophobic monomer by irradiating the hydrophobic monomer with light in the presence of a vinyl ether-based polymer represented by the following Formula (1), 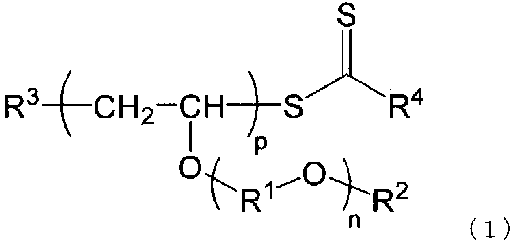 wherein
R¹ represents an alkanediyl group having 1 to 5 carbon atoms,
R² represents a hydrogen atom or an alkyl group having 1 to 3 carbon atoms,
R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶) (R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
n represents an integer from 1 to 10, and
p represents the number of repetitions of a repeating unit, 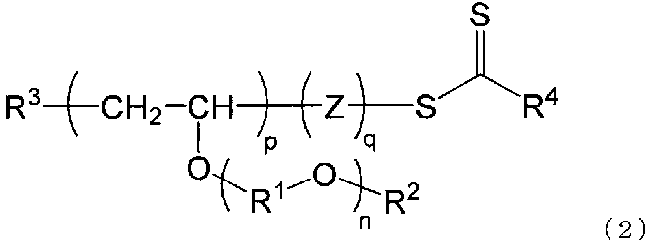 wherein
Z represents a repeating unit derived from the hydrophobic monomer,
q represents the number of repetitions of the repeating unit derived from the hydrophobic monomer, and
R¹, R², R³, R⁴, n, and p have the same meaning as described above.

2. The production method according to claim 1, wherein the hydrophobic monomer is one or more hydrophobic monomers selected from the group consisting of an aromatic vinyl-based hydrophobic monomer, a (meth)acrylic acid ester-based hydrophobic monomer, an N-substituted (meth)acrylamide-based hydrophobic monomer, an olefin-based hydrophobic monomer, a (meth)acrylonitrile-based hydrophobic monomer, an N-vinyl group-containing heterocyclic hydrophobic monomer, a halogenated vinyl-based hydrophobic monomer, and a vinyl carboxylic acid-based hydrophobic monomer.

3. The production method according to claim 1, wherein the hydrophobic monomer is a hydrophobic conjugated monomer.

4. The production method according to claim 1, wherein the hydrophobic monomer is one or more hydrophobic monomers selected from the group consisting of an aromatic vinyl-based hydrophobic monomer, a (meth)acrylic acid ester-based hydrophobic monomer, and an N-substituted (meth)acrylamide-based hydrophobic monomer.

5. The production method according to claim 1, wherein the hydrophobic monomer is one or more hydrophobic monomers selected from the group consisting of an aromatic vinyl-based hydrophobic monomer and a (meth)acrylic acid ester-based hydrophobic monomer.

6. The production method according to any one of claims 1 to 5, wherein R³ is -C(R⁵)(R⁶)-CN, -C(R¹²)(R¹³)-(CH₂)-COOR¹⁴, -C(R¹⁵)(X²)-(CH₂)_{b}-COOR¹⁶, -C(R¹⁷)(CN)-(CH₂)_{c}-COOR¹⁸, or - C(R¹⁹)(CN)-(CH₂)_{d}-OH.

7. The production method according to any one of claims 1 to 6, wherein R⁴ is -N(R²⁹)(R³⁰), -N(R³¹)(X⁵), -N(X⁶)(X⁷), - N(R³²X⁸)(R³³X⁹), or -N(X¹⁰)(R³⁴X¹¹).

8. The production method according to any one of claims 1 to 7, wherein the block copolymer is a fine particle block copolymer.

9. A fine particle comprising a block copolymer represented by the following Formula (2). 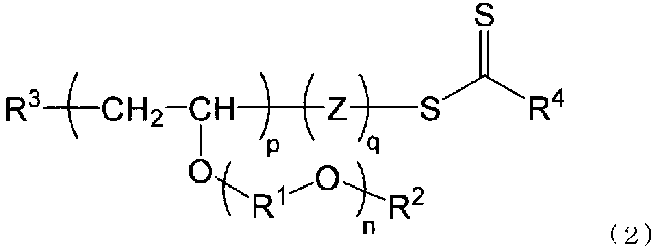 wherein
R¹ represents an alkanediyl group having 1 to 5 carbon atoms,
R² represents a hydrogen atom or an alkyl group having 1 to 3 carbon atoms,
R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C (R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶) (R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
n represents an integer from 1 to 10,
p represents the number of repetitions of a repeating unit,
Z represents a repeating unit derived from the hydrophobic monomer, and
q represents the number of repetitions of the repeating unit derived from the hydrophobic monomer.

10. The fine particle according to claim 9, wherein the hydrophobic monomer is a hydrophobic conjugated monomer.

11. A photopolymerization initiator comprising a vinyl ether-based polymer represented by the following Formula (1). 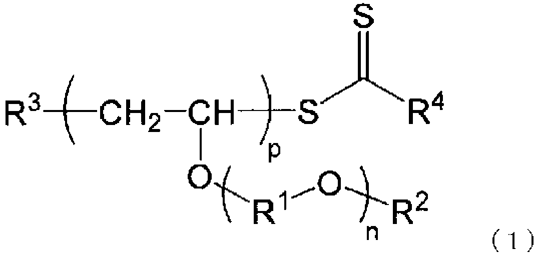 wherein
R¹ represents an alkanediyl group having 1 to 5 carbon atoms,
R² represents a hydrogen atom or an alkyl group having 1 to 3 carbon atoms,
R³ represents -C(R⁵)(R⁶)-CN, -C(R⁷)(R⁸)-X¹, - C(R⁹)(R¹⁰)(R¹¹), -C(R¹²)(R¹³)-(CH₂)ₐ-COOR¹⁴, -C(R¹⁵)(X²)-(CH₂)_{b}-COOR¹⁶, -C(R¹⁷)(CN)-(CH₂)_{c}-COOR¹⁸, -C(R¹⁹)(CN)-(CH₂)_{d}-OH, - C(R²⁰)(R²¹)-CON(R²²)H, or -C(R²³)(R²⁴)-CON(R²⁵)(R²⁶) (R⁵ to R²¹, R²³, and R²⁴ each independently represent a hydrogen atom or a substituted or unsubstituted alkyl group having 1 to 12 carbon atoms, R²², R²⁵, and R²⁶ each independently represent a substituted or unsubstituted alkyl group having 1 to 12 carbon atoms, X¹ and X² each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, and a to d each independently represent an integer from 0 to 8.),
R⁴ represents -S-R²⁷, -S-X³, -S-R²⁸-X⁴, -N(R²⁹)(R³⁰), - N(R³¹)(X⁵), -N(X⁶)(X⁷), -N(R³²X⁸)(R³³X⁹), or -N(X¹⁰)(R³⁴X¹¹) (R²⁷ and R²⁹ to R³¹ each independently represent a substituted or unsubstituted alkyl group having 1 to 12 carbon atoms, R²⁸ and R³² to R³⁴ each independently represent a substituted or unsubstituted alkanediyl group having 1 to 12 carbon atoms, and X³ to X¹¹ each independently represent a substituted or unsubstituted phenyl group, a substituted or unsubstituted naphthyl group, a substituted or unsubstituted anthracenyl group, a substituted or unsubstituted pyrenyl group, or a substituted or unsubstituted pyridyl group, provided that R²⁹ and R³⁰ may form a heterocyclic ring with an adjacent nitrogen atom.),
n represents an integer from 1 to 10, and
p represents the number of repetitions of a repeating unit.

12. The photopolymerization initiator according to claim 11, which is a photo-RAFT polymerization initiator.
